# EUROPEAN PATENT APPLICATION

(11) **EP 1 764 495 A2**
(43) Date of publication of application: **21.03.2007**
(21) Application number: 06254787.2
(22) Date of filing: 14.09.2006
(51) Int. Cl.: F02C 7/24, F01D 25/30

(54) **Method and apparatus for housing gas turbine engines**

(30) Priority: 19.09.2005 US 230247
(71) Applicant: General Electric Company, Schenectady, NY 12345 (US)
(72) Inventor: Horner, Michael W., West Chester Ohio 45069 (US)
(74) Representative: Illingworth-Law, William Illingworth

(57) **Abstract**

A method for housing a gas turbine engine (10) including an inlet portion (12), an engine portion (14), and an exhaust portion (16). The method includes containing at least a portion of the engine portion of the gas turbine engine within a first module (38), containing at least a portion of one of the inlet portion of the gas turbine engine and the exhaust portion of the gas turbine engine within a second module (42) that is separate from the first module, and removably coupling the second module to the first module.

## Description

### BACKGROUND OF THE INVENTION

This invention relates generally to gas turbine engines, and more specifically to modules used for housing gas turbine engines.

Gas turbine engines are used as a power source within a variety of applications. To protect the engine from the environment, and to shield a surrounding structure from the gas turbine engine, gas turbine engines are sometimes mounted within a module. For example, in marine applications, gas turbine engines may be contained within a module located in the lower portion of a ship hull. At least some known modules include a rectangular base structure having a floor, a ceiling, and forward, rear, and side walls that form a complete enclosure around the engine. The floor, ceiling, and front and side walls may be insulated to protect surrounding structures from heat produced by the engine, as well as to reduce noise emitted by the engine. Such known modules that form a complete enclosure around the engine may generally surround the entire engine, such that the module may contain the inlet and exhaust air chambers, as well as any auxiliary systems of the engine. However, because such modules are sized to house the entire engine, such modules may be heavy and may occupy a large volume of space.

### BRIEF DESCRIPTION OF THE INVENTION

In one aspect, a method is provided for housing a gas turbine engine including an inlet portion, an engine portion, and an exhaust portion. The method includes containing at least a portion of the engine portion of the gas turbine engine within a first module, containing at least a portion of either of the inlet portion of the gas turbine engine or the exhaust portion of the gas turbine engine within a second module that is separate from the first module, and removably coupling the second module to the first module.

In another aspect, a gas turbine engine assembly includes a gas turbine engine having an inlet portion, an engine portion, and an exhaust portion. The gas turbine engine assembly also includes a first module. The engine portion of the gas turbine engine is at least partially contained within the first module. The gas turbine engine assembly also includes a second module that is separate from the first module. Either of the engine inlet portion or the engine exhaust portion of the gas turbine engine is at least partially contained within the second module.

In a further aspect, a module assembly is provided for a gas turbine engine having an inlet portion, and engine portion, and an exhaust portion. The module assembly includes a first module sized to at least partially contain the engine portion of the gas turbine engine, and a second module separate from the first module. The second module is sized to at least partially contain one of the inlet portion and the exhaust portion of the gas turbine engine. The second module includes an arcuate bottom wall.

### BRIEF DESCRIPTION OF THE DRAWINGS

Embodiments of the present invention will now be described, by way of example only, with reference to the accompanying drawings, in which:
Figure 1 is a schematic illustration of an exemplary gas turbine engine.
Figure 2 is a schematic view of an exemplary embodiment of a gas turbine engine assembly including an exemplary embodiment of a module assembly.
Figure 3 is an exploded perspective view of the module assembly shown in Figure 2.

### DETAILED DESCRIPTION OF THE INVENTION

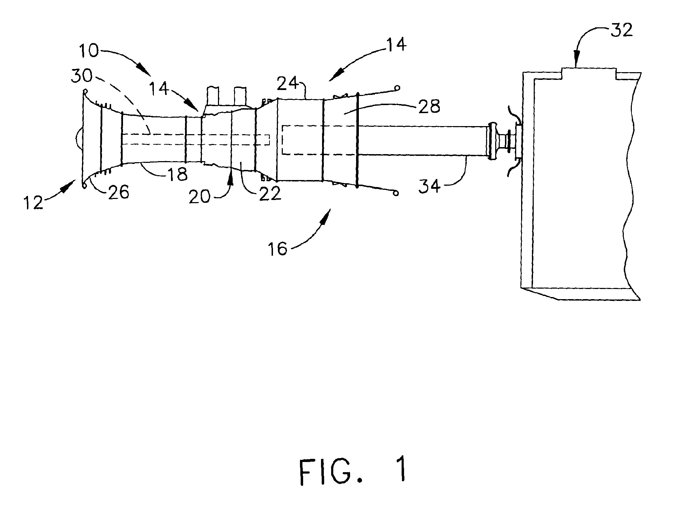

Figure 1 is a schematic illustration of an exemplary gas turbine engine 10 including an inlet portion 12, an engine portion 14, and an exhaust portion 16. Engine portion 14 includes at least one compressor 18, a combustor 20, a high pressure turbine 22, and a low pressure turbine 24 connected serially. Inlet portion 12 includes an inlet 26, and exhaust portion 16 includes an exhaust nozzle 28. In one embodiment, engine 10 is an LM2500 engine commercially available from General Electric Company, Cincinnati, Ohio. Compressor 18 and turbine 22 are coupled by a first shaft 30, and turbine 24 and a driven load 32 are coupled by a second shaft 34.

In operation, air flows into engine inlet 26 through compressor 18 and is compressed. Compressed air is then channeled to combustor 20 where it is mixed with fuel and ignited. Airflow from combustor 20 drives rotating turbines 22 and 24 and exits gas turbine engine 10 through exhaust nozzle 28.

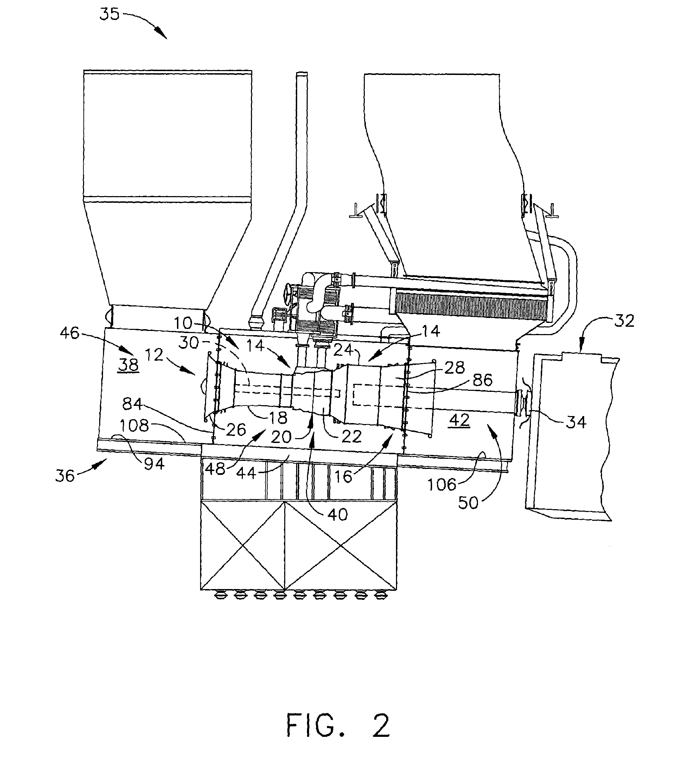

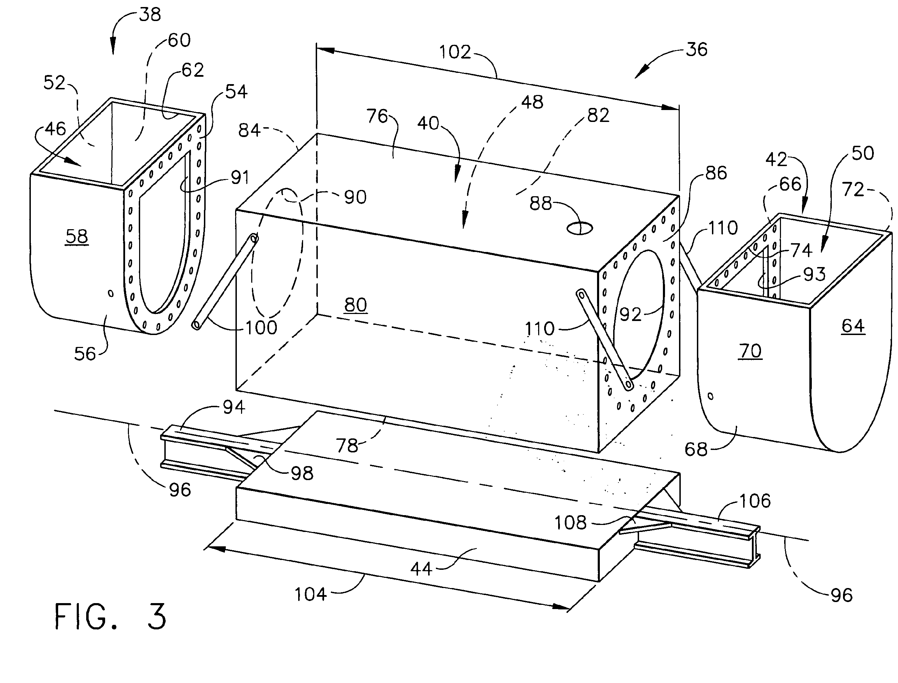

Figure 2 is a schematic view of an exemplary embodiment of a gas turbine engine assembly 35 including a module assembly 36. Figure 3 is an exploded perspective view of module assembly 36. Although module assembly 36 may be used to contain any gas turbine engine, in the exemplary embodiment module assembly 36 is used to contain gas turbine engine 10. Module assembly 36 includes an inlet module 38 for containing inlet portion 12 of engine 10, an engine module 40 for containing engine portion 14 of engine 10, and an exhaust module 42 for containing exhaust portion 16 of engine 10, as will be described in more detail below. Any of modules 38, 40, and 42 may be referred to herein as a first, a second, and/or a third module. In the exemplary embodiment, module assembly 36 includes a base 44 coupled to engine module 40 for supporting module assembly 36. Module assembly 36 may be used within structures (not shown) that utilize power generated by engine 10. For example, module 40 may be installed within a ship (not shown).

As can be appreciated by the description and illustrations herein of modules 38, 40, and 42, modules 38, 40, and 42 are separate modules that may be positioned adjacent each other and/or coupled together for generally containing engine 10. More specifically, inlet module 38 defines a cavity 46 sized and/or shaped to at least partially contain engine inlet portion 12 therein. Similarly, engine module 40 defines a cavity 48 sized and/or shaped to at least partially contain engine portion 14 therein, and exhaust module 42 defines a cavity 50 sized and/or shaped to at least partially contain engine exhaust portion 16 therein.

Inlet module 38 may have any suitable size and/or shape to at least partially contain inlet portion 12. For example, and although inlet module 38 may include any suitable shape, in the exemplary embodiment inlet module 38 includes a forward wall 52, a rear wall 54, an arcuate bottom wall 56, and two opposite side walls 58 and 60. In some embodiments, inlet module 38 includes a top wall (not shown). In some embodiments, inlet module 38 does not include rear wall 54. Inlet module 38 includes a port 62 for receiving a flow of air into inlet module cavity 46 for use by engine 10. In some embodiments, forward wall 52, rear wall 54, if included, bottom wall 56, side wall 58, side wall 60, and/or a top wall, if included, of inlet module 38 may be insulated to protect surrounding structures (not shown) from heat produced by engine 10 and/or to reduce noise emitted by engine 10.

Exhaust module 42 may have any suitable size and/or shape to at least partially contain engine exhaust portion 16. For example, and although exhaust module 42 may include any suitable shape, in the exemplary embodiment exhaust module 42 includes a rear wall 64, a forward wall 66, an arcuate bottom wall 68, and two opposite side walls 70 and 72. In some embodiments, exhaust module 42 includes a top wall (not shown). In some embodiments, exhaust module 42 does not include forward wall 66. Exhaust module 42 includes a port 74 for exhausting a flow of combustion gases generated by engine 10. In some embodiments, rear wall 64, forward wall 66, if included, bottom wall 68, side wall 70, side wall 72, and/or a top wall, if included, of exhaust module 42 may be insulated to protect surrounding structures from heat produced by engine 10 and/or to reduce noise emitted by engine 10.

Engine module 40 may have any suitable size and/or shape to at least partially contain engine portion 14. For example, and although engine module 40 may include any suitable shape, in the exemplary embodiment engine module 40 has a generally rectangular cross sectional-shape defined by a top wall 76, a bottom wall 78 opposite top wall 76, and two opposite side walls 80 and 82. In the exemplary embodiment, engine module 40 also includes a forward wall 84 and a rear wall 86 that is opposite forward wall 84. In some embodiments, engine module 40 does not include forward wall 84 and/or rear wall 86. Moreover, in the exemplary embodiment, engine module 40 includes a port 88 that provides cooling air to engine module cavity 48 for cooling engine 10. In some embodiments, top wall 76, bottom wall 78, side wall 80, side wall 82, forward wall 84, if included, and/or rear wall 86, if included, of engine module 40 may be insulated to protect surrounding structures from heat produced by engine 10 and/or to reduce noise emitted by engine 10.

Engine module forward wall 84, if included, includes an opening 90. Similarly, inlet module rear wall 54, if included, includes an opening 91. Openings 90 and 91 are sized and shaped to receive a portion of engine 10 therein. More specifically, engine inlet portion 12 extends through openings 90 and 91 such that engine inlet 26 is positioned in a flowpath of ambient air received through inlet module port 62. As such, ambient air received through inlet module port 62 will enter engine inlet 26. Accordingly, engine module forward wall 84 and/or inlet module rear wall 54 separates inlet module cavity 46 from engine module cavity 48, and prevents airflow received through inlet module port 62 from flowing around engine 10. As a result, airflow entering inlet module port 62 is routed through engine 10. In some embodiments, openings 90 and/or 91 include a seal (not shown) attached to a surface (not shown) that at least partially defines openings 90 and/or 91 to facilitate preventing airflow received through inlet module port 62 from flowing around engine 10. Engine module rear wall 86, if included, includes an opening 92. Similarly, exhaust module forward wall 66, if included, includes an opening 93. Openings 92 and 93 are sized and shaped to receive a portion of engine 10 therein. More specifically, engine exhaust portion 16 extends through openings 92 and 93. In some embodiments, openings 92 and/or 93 include a seal (not shown) attached to a surface (not shown) that at least partially defines openings 92 and/or 93.

Inlet module 38 is positioned adjacent engine module 40 and at least partially receives engine inlet portion 12. In the exemplary embodiment, inlet module 38 is coupled to engine module 40. More specifically, in the exemplary embodiment, inlet module rear wall 54 is coupled to engine module forward wall 84. Inlet module 38 and engine module 40 may be coupled together in any configuration and/or arrangement, and/or using any suitable means, such as, but not limited to, threaded fasteners and/or welds. In some embodiments, inlet module 38 and engine module 40 are removably coupled together. In addition or alternative to the structural support provided by being coupled to engine module 40, and for example in the exemplary embodiment, inlet module 38 is supported by a support member 94 extending outwardly from base 44. In some embodiments, inlet module 38 is coupled to support member 94. Inlet module 38 may be coupled to support member 94 using any suitable means, such as, but not limited to, threaded fasteners and/or welds. Support member 94 may be include any configuration, structure, and/or arrangement that enables support member 94 to function as described herein. In the exemplary embodiment, support member 94 is generally concentrically aligned with a central longitudinal axis 96 of base 44. An additional support member 98 may be coupled to support member 94 and/or to base 44 to provide additional structural support to inlet module 38. Support member 98 may be coupled to support member 94 and/or base 44 using any suitable means, such as, but not limited to, threaded fasteners and/or welds. Support member 98 may include any configuration, structure, and/or arrangement that enables support member 98 to function as described herein. In addition or alternative to support members 94 and/or 98, a support member 100 may be coupled to inlet module 38 and engine module 40 to facilitate supporting inlet module 38. Support member 100 may be coupled to inlet module 38 and engine module 40 using any suitable means, such as, but not limited to, threaded fasteners and/or welds. Support member 100 may include any configuration, structure, and/or arrangement that enables support member 100 to function as described herein.

Exhaust module 42 is positioned adjacent engine module 40 and at least partially receives engine exhaust portion 16. In the exemplary embodiment, exhaust module 42 is coupled to engine module 40. More specifically, in the exemplary embodiment, exhaust module forward wall 66 is coupled to engine module rear wall 86. Exhaust module 42 and engine module 40 may be coupled together in any configuration and/or arrangement, and/or using any suitable means, such as, but not limited to, threaded fasteners and/or welds. In some embodiments, exhaust module 42 and engine module 40 are removably coupled together. In addition to the structural support provided by being coupled to engine module 40, and for example in the exemplary embodiment, exhaust module 42 is supported by a support member 106 extending outwardly from base 44. In some embodiments, exhaust module 42 is coupled to support member 106. Exhaust module 42 may be coupled to support member 106 using any suitable means, such as, but not limited to, threaded fasteners and/or welds. Support member 106 may include any configuration, structure, and/or arrangement that enables support member 106 to function as described herein. In the exemplary embodiment, support member 106 is generally concentrically aligned with base central longitudinal axis 96. An additional support member 108 may be coupled to support member 106 and/or to base 44 to provide additional support to exhaust module 42. Support member 108 may be coupled to support member 106 and/or base 44 using any suitable means, such as, but not limited to, threaded fasteners and/or welds. Support member 108 may include any configuration, structure, and/or arrangement that enables support member 108 to function as described herein. In addition or alternative to support members 106 and 108, a support member 110 may be coupled to exhaust module 42 and to engine module 40 to facilitate supporting exhaust module 42. Support member 110 may be coupled to exhaust module 42 and engine module 40 using any suitable means, such as, but not limited to, threaded fasteners and/or welds. Support member 110 may include any configuration, structure, and/or arrangement that enables support member 110 to function as described herein.

Base 44 may be any size and/or shape that enables base 44 to function as described herein. Although base 44 may have any size and/or shape, including, but not limited to, any length, in some embodiments base 44 extends a length that is shorter or substantially equal to a length 102 of engine module 40. For example, in the exemplary embodiment base 44 extends a length 104 that is substantially equal to length 102. In other embodiments, inlet module 38 and/or exhaust module 42 are supported by base 44.

The above-described module assembly 36 may facilitate reducing an overall size and/or weight, and therefore possibly also an overall cost, of module assemblies that house gas turbine engines. For example, because inlet and exhaust modules 38 and 42, respectively, are separate modules from engine module 40, inlet and exhaust modules 38 and 42, respectively, can be sized and/or shaped to more closely correspond to a size and/or shape of engine inlet portion 12 and engine exhaust portion 16, respectively, than the inlet and exhaust portions of some known module assemblies that form a complete enclosure around the engine using only one module. Accordingly, a size and/or weight, and therefore possibly also a cost, of modules 38 and 42 can be reduced as compared to the inlet and exhaust portions of such known module assemblies. Module assembly 36 may therefore facilitate reducing an overall size and/or weight, and therefore possibly also an overall cost, of module assemblies that house gas turbine engines. Reducing a size of module assembly 36, or portions thereof, may be beneficial because of limited space within some structures that utilize gas turbine engines, for example the lower portion of a ship hull. Moreover, because of the reduced size and/or weight of modules 38 and 42, modules 38 and 42 may not need to be supported by module assembly base 44. Accordingly, a size, weight, and/or strength of base 44 may be reduced, which may reduce a cost of base 44. For example, a length of base 44 may be reduced as compared to the bases of some known module assemblies that house gas turbine engines. As the bases of such known module assemblies occupy space and add weight to such known module assemblies, reducing a size and/or weight of base 44 may facilitate a reduction in an overall size and/or weight, and therefore possibly also a cost, of module assembly 36. Accordingly, the above-described module assembly 36 may facilitate reducing an overall size and/or weight, and therefore possibly also an overall cost, of module assemblies that house gas turbine engines.

Exemplary embodiments of methods and assemblies are described and/or illustrated herein in detail. The methods and assemblies are not limited to the specific embodiments described herein, but rather, components of each assembly, as well as steps of each method, may be utilized independently and separately from other components and steps described herein. Each component, and each method step, can also be used in combination with other components and/or method steps.

When introducing elements/components/etc. of the methods and assemblies described and/or illustrated herein, the articles "a", "an", "the" and "said" are intended to mean that there are one or more of the element(s)/component(s)/etc. The terms "comprising", "including" and "having" are intended to be inclusive and mean that there may be additional element(s)/component(s)/etc. other than the listed element(s)/component(s)/etc.

While the invention has been described in terms of various specific embodiments, those skilled in the art will recognize that the invention can be practiced with modification within the spirit and scope of the claims.

**PARTS LIST**

| | |
|---|---|
| 10 | gas turbine engine |
| 12 | inlet portion |
| 14 | engine portion |
| 16 | exhaust portion |
| 18 | compressor |
| 20 | combustor |
| 22 | high pressure turbine |
| 24 | low pressure turbine |
| 26 | engine inlet |
| 28 | exhaust nozzle |
| 30 | first shaft |
| 32 | driven load |
| 34 | second shaft |
| 35 | gas turbine engine assembly |
| 36 | supporting module assembly |
| 38 | inlet module |
| 40 | engine module |
| 42 | exhaust module |
| 44 | base |
| 46 | inlet module cavity |
| 48 | engine module cavity |
| 50 | cavity |
| 52 | forward wall |
| 54 | inlet module rear wall |
| 56 | bottom wall |
| 58 | side wall |
| 60 | side wall |
| 62 | inlet module port |
| 64 | rear wall |
| 64 | rear wall |
| 66 | exhaust module forward wall |
| 68 | bottom wall |
| 70 | side wall |
| 72 | side wall |
| 74 | port |
| 76 | top wall |
| 78 | bottom wall |
| 80 | side wall |
| 82 | side wall |
| 84 | forward wall |
| 86 | rear wall |
| 88 | port |
| 90 | openings |
| 91 | opening |
| 92 | openings |
| 93 | opening |
| 94 | support members |
| 96 | central longitudinal axis |
| 98 | support member |
| 100 | support member |
| 102 | length |
| 104 | length |
| 106 | support member |
| 108 | support member |
| 110 | support member |

## Claims

1. A gas turbine engine assembly comprising:
a gas turbine engine (10) comprising an inlet portion (12), an engine portion (14), and an exhaust portion (16);
first module (40), said engine portion of said gas turbine engine at least partially contained within said first module; and
second module (38, 42) separate from said first module, one of said inlet portion and said exhaust portion of said gas turbine engine at least partially contained within said second module.

2. A gas turbine engine assembly in accordance with Claim 1 wherein said inlet portion (12) is contained within said second module (38), said assembly further comprises a third module (42) that is separate from said engine module (40), and said exhaust portion (16) is contained within said third module.

3. A gas turbine engine assembly in accordance with Claim 1 further comprising a base (44) coupled to said first module (40) and a support member (94) extending outwardly from said base, said second module (38, 42) supported by said support member.

4. A gas turbine engine assembly in accordance with Claim 3 wherein said second module (38, 42) is coupled to said support member (94).

5. A gas turbine engine assembly in accordance with Claim 3 wherein said support member (94) is generally aligned with a central axis (96) of said base (44).

6. A gas turbine engine assembly in accordance with Claim 3 further comprising an additional support member (98) coupled to said support member (94) and to said first module (40).

7. A gas turbine engine assembly in accordance with Claim 1 wherein said first module (40) comprises a forward wall (84) and a rear wall (86) opposite said forward wall, said second module (38, 42) coupled to one of said forward wall and said rear wall.

8. A gas turbine engine assembly in accordance with Claim 1 wherein said second module (38, 42) comprises an arcuate bottom wall (56, 58).

9. A gas turbine engine assembly in accordance with Claim 1 further comprising a support member (94) coupled to said first module (40) and coupled to said second module (38, 42).

10. A module assembly for a gas turbine engine (10) having an inlet portion (12), and engine portion (14), and an exhaust portion (16), said module assembly comprising:
first module (40) sized to at least partially contain the engine portion of the gas turbine engine; and
second module (38, 42) separate from said first module, said second module sized to at least partially contain one of the inlet portion and the exhaust portion of the gas turbine engine, said second module comprising an arcuate bottom wall (56, 58).
